# EUROPEAN PATENT APPLICATION

(11) **EP 4 459 880 A1**
(43) Date of publication of application: **06.11.2024**
(21) Application number: 24167086.8
(22) Date of filing: 27.03.2024
(51) Int. Cl.: H04B 1/10, H04L 5/00, H04W 72/04

(54) **METHOD FOR INTERFERENCE PARAMETER DETECTION (SUCH AS MODULATION ORDER DETECTION) ENHANCEMENT**

(30) Priority: 24.04.2023 US 202363461477 P
(71) Applicant: Nokia Technologies Oy, 02610 Espoo (FI)
(72) Inventor: DHERE, Amol, 9260 Gistrup (DK); PETERSEN, Karsten, 9000 Aalborg (DK); BLÜCHER BRINK, Stig, 9220 Aalborg (DK); MUELLER, Axel, 91300 Massy (FR)
(74) Representative: Bryers Intellectual Property Ltd

(57) **Abstract**

A network element in a wireless network sends, to a target UE, configuration of CSI RSs for use in a time-frequency resource space of a PDSCH. The configuration informs the UE to use the CSI RSs for interference parameter detection of co-scheduled UE(s) in the PDSCH. The network element transmits, toward the target UE, the CSI RSs. A target UE in a wireless network receives, from a network element, configuration of CSI RSs for use in a time-frequency resource space of a physical downlink shared channel. The configuration informs the target UE to use the CSI RSs for interference parameter detection of co-scheduled UE(s) in the PDSCH. The target UE receives, from the network element, the CSI RSs. The target UE performs the interference parameter detection using the CSI RSs.

## Description

### TECHNICAL FIELD

Examples of embodiments herein relate generally to wireless communication systems and, more specifically, relate to reference signal (RS) transmission and reception for multiple user, multiple input, multiple output (MU-MIMO) communications.

### BACKGROUND

In wireless communication networks, different modulation schemes are used to transmit or receive data. For instance, quadrature phase-shift keying (QPSK) uses four symbols, one in each quadrant of a constellation diagram with in-phase and quadrature amplitudes. More complex modulations include 16-QAM (16-point quadrature amplitude modulation, also 16-Qam), which has 4 symbols in each quadrant, and 64-Qam, with 16 symbols in each quadrant.

Some wireless networks can dynamically select between these modulations. For instance, a User Equipment (UE, a wireless device that connects to the network) that is close to a transmitter and has a good channel might be able to use 64-Qam, whereas a UE that is far from a transmitter and/or has a bad channel might need QPSK. And a UE that is moving can transition from closer to the transmitter to farther away, or vice versa, and the network can select an appropriate modulation accordingly.

Such a modulation might be indicated by a modulation and coding scheme (MCS) indication, and the UE has to be able to determine which MCS and corresponding modulation scheme to use to receive a transmission from the network. This may also be referred to as Automatic Modulation Classification (AMC). Some receiver algorithms need to determine the modulation order (MO) used by interfering UEs to be able to reduce the negative impact of the interfering waveform. This is often referred to as MO detection.

### BRIEF SUMMARY

This section is intended to include examples and is not intended to be limiting.

In an exemplary embodiment, a method is disclosed that includes sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and transmitting, by the network element toward the target user equipment, the channel state information reference signals.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and transmitting, by the network element toward the target user equipment, the channel state information reference signals.

An exemplary computer program product includes a computer-readable storage medium bearing instructions that, when executed by an apparatus, cause the apparatus to perform at least the following: sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and transmitting, by the network element toward the target user equipment, the channel state information reference signals.

In another exemplary embodiment, an apparatus comprises means for performing: sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and transmitting, by the network element toward the target user equipment, the channel state information reference signals.

In an exemplary embodiment, a method is disclosed that includes receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; receiving, by the target user equipment from the network element, the channel state information reference signals; and performing, by the target user equipment, the interference parameter detection using the channel state information reference signals.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; receiving, by the target user equipment from the network element, the channel state information reference signals; and performing, by the target user equipment, the interference parameter detection using the channel state information reference signals.

An exemplary computer program product includes a computer-readable storage medium bearing instructions that, when executed by an apparatus, cause the apparatus to perform at least the following: receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; receiving, by the target user equipment from the network element, the channel state information reference signals; and performing, by the target user equipment, the interference parameter detection using the channel state information reference signals.

In another exemplary embodiment, an apparatus comprises means for performing: receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; receiving, by the target user equipment from the network element, the channel state information reference signals; and performing, by the target user equipment, the interference parameter detection using the channel state information reference signals.

### BRIEF DESCRIPTION OF THE DRAWINGS

In the attached drawings:
FIG. 1A is a block diagram of one possible and non-limiting exemplary system in which the exemplary embodiments may be practiced;
FIG. 1B is an example of a block diagram of an apparatus suitable for implementing any of the nodes in FIG. 1A;
FIG. 2 illustrates constellation samples of QPSK, 16-QAM and 64-QAM modulation orders at SNR =20 dB;
FIG. 3 illustrates constellation samples of QPSK, 16-QAM, and 64-QAM modulation orders at SNR = 6dB;
FIG. 4 is a graph illustrating impact of full blind MO detection on throughput as compared to a genie (aided) receiver;
FIG. 5 is a graph illustrating ZP-CSI-RS based full blind MO detection performance in accordance with an example;
FIG. 6 is a signaling diagram showing configuration of ZP-CSI-RS for downlink MU-MIMO and its usage in an example;
FIG. 7 is a flowchart for interference parameter detection (such as modulation order detection) enhancement performed by a network element in an example; and
FIG. 8 is a flowchart for interference parameter detection (such as modulation order detection) enhancement performed by a UE in an example.

### DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

When more than one drawing reference numeral, word, or acronym is used within this description with "/", and in general as used within this description, the "/" may be interpreted as "or", "and", or "both".

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

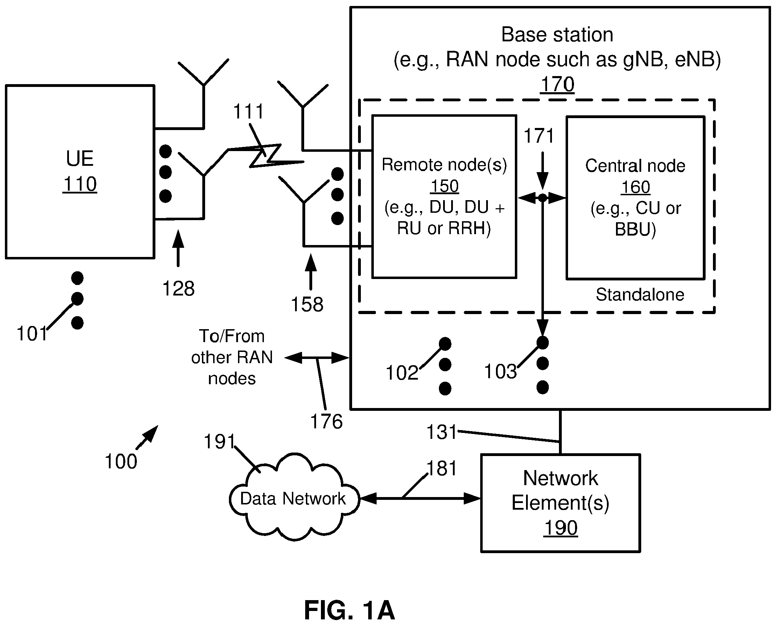

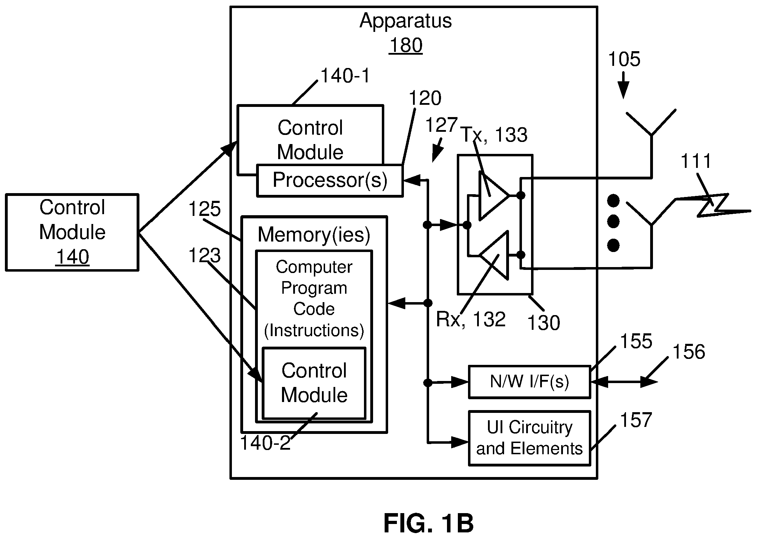

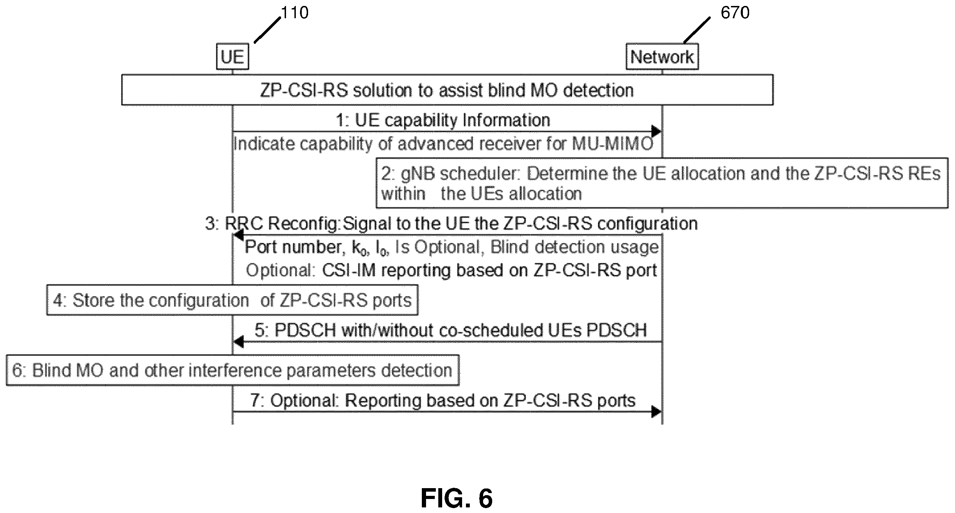

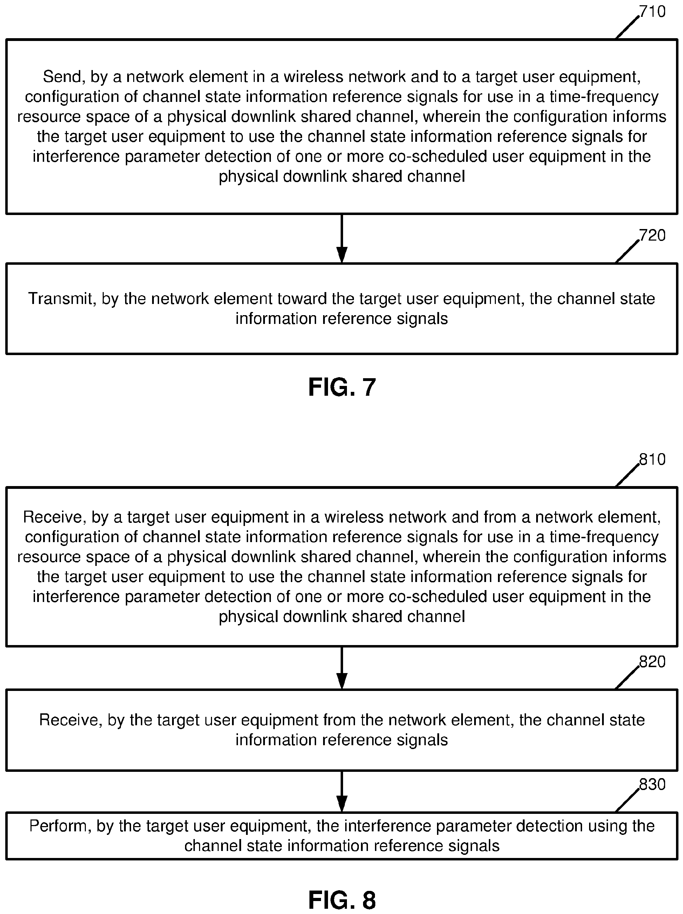

Any flow diagram (see FIGS. 7 and 8) or signaling diagram (see FIG. 6) herein is considered to be a logic flow diagram, and illustrates the operation of an exemplary method, results of execution of computer program instructions embodied on a computer readable memory, functions performed by logic implemented in hardware, and/or interconnected means for performing functions in accordance with an exemplary embodiment. Block diagrams (such as FIGS. 1A and 1B) also illustrate the operation of an exemplary method, results of execution of computer program instructions embodied on a computer readable memory, functions performed by logic implemented in hardware, and/or interconnected means for performing functions in accordance with an exemplary embodiment.

The exemplary embodiments herein describe techniques for method for modulation order detection enhancement. Additional description of these techniques is presented after a system into which the exemplary embodiments may be used is described.

Turning to FIG. 1A, this figure shows a block diagram of one possible and non-limiting exemplary system in which the exemplary embodiments may be practiced. A number of nodes are shown: a user equipment (UE) 110; a network element such as for example a base station 170; and additional (e.g., core) network element(s) 190.

In FIG. 1A, a user equipment (UE) 110, as one of the nodes, is in wireless communication via wireless link 111 with a wireless network 100. A UE 110 is a wireless, typically mobile device that can access a wireless network. The UE 110 is illustrated with one or more antennas 128. The ellipses 101 indicate there could be multiple UEs 110.

The network element such as for example the base station 170, as another of the nodes but one that is part of the wireless network 100, provides access by wireless devices such as the UE 110 to the wireless network 100, and is therefore one example of a network element. The base station 170 is illustrated as having one or more antennas 158. There are many options for the base station 170. In general, the base station 170 is a RAN node, and in particular could be a gNB, or other network node There are, however, many options including an eNB for the base station, or options other than cellular systems.

There are a number of configurations for the base station 170. One such is a "standalone" configuration, which includes all circuity as part of a single unit, and accesses the antennas 158. More commonly today, circuitry is split into one or more remote nodes 150 (accessing antennas 158) and central nodes 160. For instance, for 5G (also referred to as NR), a gNB might include a distributed unit (DU), or DU and radio unit (RU) as the remote nodes(s), and a central unit (CU) as the central node 160. For LTE, the base station 170 might include an eNB having a remote radio head as remote node 150 and a base band unit (BBU) as a central node 160. The remote node(s) 150 are coupled to a central node 160 via one or more links 171. There could be multiple remote nodes 150 for a single central node 160, and this is indicated by ellipses 102, indicating multiple remote nodes, and ellipses 103, indicating additional links 171. The remote nodes 150 are remote in the sense they are contained in different physical enclosures from a physical enclosure containing a corresponding central node 160. The link(s) 171 may be implemented using fiber optics, wireless techniques, or any other technique for data communications.

Two or more base stations 170 communicate using, e.g., link(s) 176. The link(s) 176 may be wired or wireless or both and may implement, e.g., an Xn interface for 5G, an X2 interface for LTE, or other suitable interface for other standards.

The wireless network 100 may include additional network element or elements 190, as a third illustrated node(s), that may include core network functionality, and which provide connectivity via a link or links 181 with a data network 191, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity) functionality and/or SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards.

In general, the various embodiments of the user equipment 110 can include, but are not limited to, cellular telephones (such as smart phones, mobile phones, cellular phones, voice over Internet Protocol (IP) (VoIP) phones, and/or wireless local loop phones), tablets, portable computers, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptop-embedded equipment (LEE), laptop-mounted equipment (LME), Universal Serial Bus (USB) dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the UE 110 could be any end device that may be capable of wireless communication. By way of example rather than limitation, the UE may also be referred to as a communication device, terminal device (MT), a Subscriber Station (SS), a Portable Subscriber Station, a Mobile Station (MS), or an Access Terminal (AT).

Turning to FIG. 1B, this figure is an example of a block diagram of an apparatus 180 suitable for implementing any of the nodes in FIG.1A. The apparatus 180 includes circuitry comprising one or more processors 120, one or more memories 125, one or more transceivers 130, one or more network (N/W) interface(s) (I/F(s)) 155 and user interface (UI) circuitry and elements 157, interconnected through one or more buses 127. Since this is an example covering all of the nodes in FIG. 1A, some of the nodes may not have all of the circuitry. For example, a base station 170 might not have UI circuitry and elements 157. All of the nodes may have additional circuitry, not described here. FIG. 1B is presented merely as an example.

Each of the one or more transceivers 130 includes a receiver, Rx, 132 and a transmitter, Tx, 133. The one or more buses 127 may be address, data, and/or control buses, and may include any interconnection mechanism, such as a series of lines on a motherboard or integrated circuit, fiber optics or other optical communication equipment, and the like. The one or more transceivers 130 are connected to one or more antennas 105, which could be one of the antennas 128 (from UE 110) or antennas 158 (from base station 170), and may communicate using wireless link 111.

The one or more memories 125 include computer program code 123. The apparatus 180 includes a control module 140, comprising one of or both parts 140-1 and/or 140-2, which may be implemented in a number of ways. The control module 140 may be implemented in hardware as control module 140-1, such as being implemented as part of the one or more processors 120. The control module 140-1 may be implemented also as an integrated circuit or through other hardware such as a programmable gate array. In another example, the control module 140 may be implemented as control module 140-2, which is implemented as computer program code (having corresponding instructions) 123 and is executed by the one or more processors 120. For instance, the one or more memories 125 store instructions that, when executed by the one or more processors 120, cause the apparatus 180 to perform one or more of the operations as described herein. Furthermore, the one or more processors 120, one or more memories 125, and example algorithms (e.g., as flowcharts and/or signaling diagrams), encoded as instructions, programs, or code, are means for causing performance of the operations described herein.

The network interface(s) (N/W I/F(s)) 155 are wired interfaces communicating using link(s) 156, which could be fiber optic or other wired interfaces. The link(s) 156 could be the link(s) 131 and/or 176 from FIG.1A. The link(s) 131 and/or 176 from FIG.1A could also be implements using transceiver(s) 130 and corresponding wireless link(s) 111. The apparatus could include only wireless transceiver(s) 130, only N/W I/Fs 155, or both wireless transceiver(s) 130 and N/W I/Fs 155.

The apparatus 180 may or may not include UI circuitry and elements 157. These could include a display such as a touchscreen, speakers, or interface elements such as for headsets. For instance, a UE 110 of a smartphone would typically include at least a touchscreen and speakers. The UI circuitry and elements 157 may also include circuity to communicate with external UI elements (not shown) such as displays, keyboards, mice, headsets, and the like.

The computer readable memories 125 may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 125 may be means for performing storage functions. The processors 120 may be of any type suitable to the local technical environment, and may include one or more of general-purpose computers, special purpose computers, microprocessors, digital signal processors (DSPs) and processors based on a multi-core processor architecture, as non-limiting examples. The processors 120 may be means for performing functions, such as controlling the apparatus 180, and other functions as described herein.

Having thus introduced one suitable but non-limiting technical context for the practice of the exemplary embodiments, the exemplary embodiments will now be described with greater specificity.

The current state of the art of advanced receivers for downlink MU-MIMO detection, describes a class of receivers denoted as reduced complexity maximum likelihood (R-ML) receivers. This type of receiver uses complexity-minimizing techniques to achieve near-to-full maximum likelihood joint detection of target and interference UEs MIMO layers. There are several known implementations of R-ML, e.g., Sphere detection (SD), QR-DM QR-MLD, or the like.

To enable the R-MI, receivers for MU-MIMO, knowledge of multiple parameters of the interfering UEs' layers is required. Those parameters include the following: DMRS sequence, (interference) ports, FDRA (frequency domain resource allocation), TDRA (time domain resource allocation), precoding granularity, and the Modulation Order (MO) of the interfering MIMO layers.

Both blind detection by the target UE of the MO, as well as, signaling of MO (either directly or by additional information to reduce the blind detection search space) are discussed in the literature. However, options that provide specific support to the UE, in addition to direct signaling, to aid blind detection are not commonly known. Discussed options are either using DCI, which requires the gNB to dynamically update the information to the UE or semi-static RRC signaling that aims to reduce the options for blind detection, which then require high complexity blind detection on the UE side with high computational complexity and power consumption.

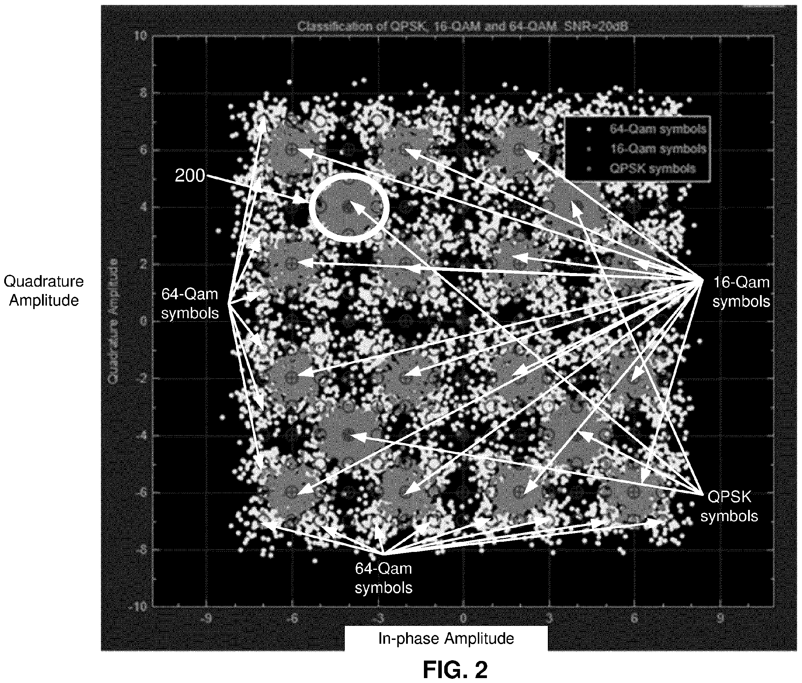

As described above, complex MO detection algorithms of co-scheduled UEs, or corresponding network assistance signaling, are needed for achieving good interference rejection performance in R-MI, receivers. The constellation diagram in FIG. 2 illustrates constellation samples of QPSK, 16-QAM, and 64-QAM modulation orders at SNR=20 dB. This figure highlights some of the symbols using an in-phase amplitude and quadrature amplitude graph. Circle 200 is put around an approximate size of the area in which a QPSK symbol inhabits. The circle 200 and the other clusters of constellation samples indicate that clustering algorithms used to find clusters in the constellation diagram should have relatively good outcomes in terms of finding clusters for these symbols.

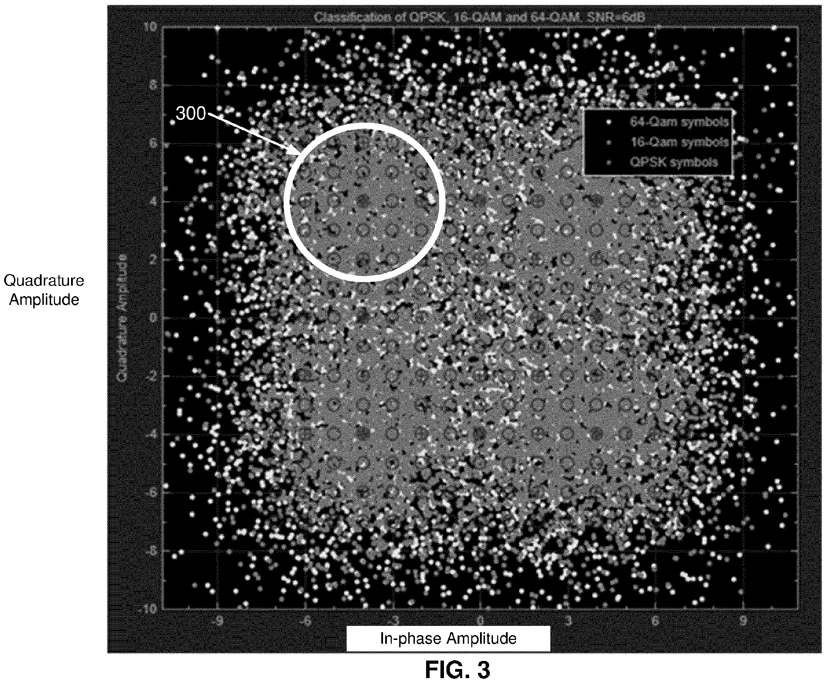

For lower SNRs, however, the actually used Modulation Order (MO) becomes increasingly difficult to detect from simply "looking" at received random constellation samples, as illustrated for SNR= 6dB: FIG. 3 illustrates constellation samples of QPSK, 16-QAM, and 64-QAM modulation orders at SNR=6dB. This example shows circle 300, which is put around an approximate size of the area in which a QPSK symbol inhabits. It can be seen as being much larger than the circle for reference 200 of FIG. 2. Furthermore, there were few data points for QPSK outside the circle 200, but there are many more data points, relative to circle 200, that are outside the circle 300. And the overall mixing of the constellation samples indicates that clustering algorithms used to find clusters in the constellation diagram will have more error.

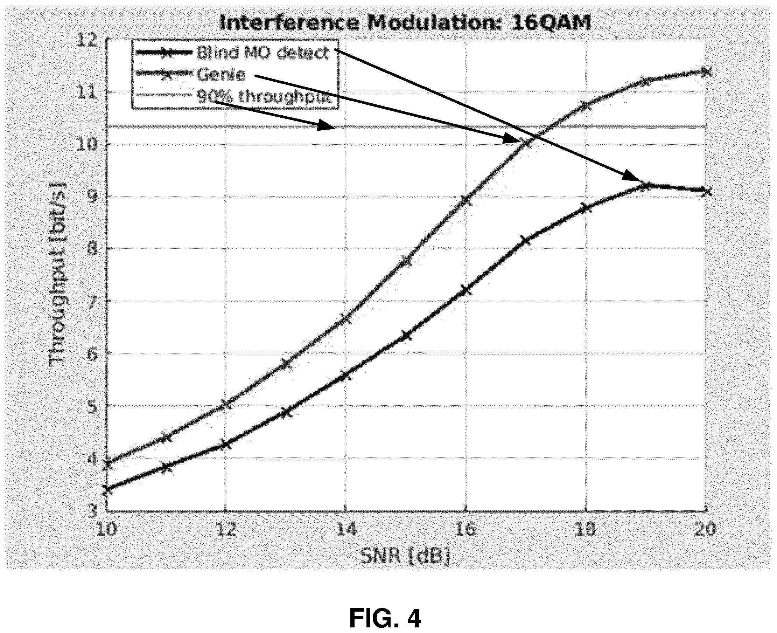

Simulations have also shown that, when using solely random data constellation samples for MO detection, this can also lead to systematic errors which prevent UEs from achieving the 10% BLER (~90% throughput) target at any SNR level. See FIG. 4, which is a graph illustrating impact of full blind MO detection on throughput as compared to a genie receiver. A genie receiver is a term used for a receiver with full knowledge of all the interference parameters. This knowledge is just assumed to be known at the receiver (hence genie). The literature often also calls this a "genie aided receiver".

This is especially true when 16 QAM or a higher order MO is being used for the co-scheduled UE. As seen in FIG. 4, there is a systematic error due to MO detection which prevents reaching 90% throughput. Compare the graph for the blind MO detect and the genie, which has higher throughput. Performance will be even worse if there is more than one co-scheduled UE.

Problem 1: Blind MO detection is complex and can lead to systematic error that prevents a UE from reaching 10 % BLER.

One possible way to address the blind detection is for network signaling of co-scheduled UEs' MOs. However, this requires adding 2 to 6 bits to DCI. This increases the encoding complexity on the gNBs, and based on gNB design, also requires significant and costly modifications. This also does not consider the fact that DCI performance is very payload-size sensitive. DCI size increase can also lead to a significant increase in demodulation complexity for UEs if one more possible DCI length gets added, because the search space grows.

Problem 2: Other techniques for addressing MO signaling are based on DCI, which can lead to increase encoding complexity and significant redesign for gNBs. This can also lead to increased demodulation complexity of DCI for UEs.

Problem 3: Most signaling to address MO detection only reduces search space and does not eliminate blind detection fully, which can also lead to systematic error/10% BLER issue as described in problem 1.

A related problem with a MU-MIMO setup is that CQI reporting by a UE is based on NZP-CSI-RS measurements, or based on previous DM-RS measurements, or both. The NZP-CSI-RS is not impacted by co-scheduled UEs PDSCH interference, and previous slots DM-RS might not be impacted by the same co-scheduled UEs.

In more detail, it is expected that the NW schedules NZP CSI-RS resources such that there is no interference from the perspective of a target UE by co-scheduled UEs PDSCH or other channels and RS. And hence a target UE cannot get a good measure of interference arising from co-scheduled UEs PDSCH or other channels/RS in the CSI-RS resources.

Problem 4: CQI reporting in a DL MU-MIMO scenario will be inaccurate, especially if the report is based on NZP-CSI-RS.

Now that an overview of the technical area has been provided, an overview of the examples is provided. In examples herein, it is proposed to configure known zero power (ZP) channel state information (CSI) reference signals (RS), with a goal of puncturing a few REs on the target UEs PDSCH, i.e., creating REs, for the target UE to perform interference measurement. This allows improved MO detection of co-scheduled UEs, without the interference of the target UE signals, and optionally additional interference measurements. However, the target UE should be informed to use the punctured PDSCH REs to improve MO detection (this signaling implicitly also informs about the existence of co-scheduled UEs). That is, if the target UE is scheduled with the ZP-CSI-RS with zero power in certain REs, the NW is able to transmit data to other UE(s), which are the co-scheduled UEs, in the ZP-CSI-RS resources of the target UE. This causes (MIMO) interference, which the target UE can then measure.

It is noted that puncturing means that REs normally being used for data are replaced with REs meant for something else, in this case RSs. In examples herein, PDSCH allocation is punctured by ZP-CSI-RS.

Such MO measurement ZP-CSI-RS configuration can be present in one or more PDSCH slots, for a UE supporting advanced receivers (e.g., an advanced-receiver with interference-cancelation capability). That is, the MO measurement ZP-CSI-RS configuration might be every slot, every second, third, and the like, or any other pattern of X slots carrying ZP-CSI-RS within Y slots. Furthermore, there can be a signaling of the presence of a co-scheduled UE or/and of the usage of the ZP-CSI-RS configuration (referred to below using "BlindDetectionUsage"). The intention for this example is to combine ZP-CSI-RS configuration along with an indication, which indicates existence or presence of co-scheduled interference UE, or/and that the ZP-CSI-RS is configured for MU-MIMO interference measurement such as for example MO measurement. In example embodiments, the indication may be sent as part of the ZP-CSI-RS configuration in, e.g., RRC signaling. In other example embodiments, the indication may be sent in a MAC CE or DCI. Note that semi-static signaling like MAC CE has improved overhead relative to dynamic signaling using DCI, but dynamic signaling may be used in certain embodiments.

In example embodiments, the co-scheduled UEs may have different non-overlapping ZP-CSI-RS configurations, if they are also advanced-receiver capable.

The signaling of the new ZP-CSI-RS use case may be performed via either one of the following methods:
1) By RRC signaling of an ZP-CSI-RS resource (or port) with a new value of an existing information element, e.g., slots 1 (NULL) in the periodicity information element, meaning that the ZP-CSI-RS port repeats every slot; or
2) By RRC signaling of an ZP-CSI-RS resource (or port(s)) with a new information element, which indicate at least one of that the ZP-CSI-RS resources (or port(s)) repeats every slot, or a subset of slots; or that there is existence of co-scheduled UE; or that the ZP-CSI-RS resources (or port(s)) are to enable blind detection of interference parameters for advanced receivers (e.g., advanced-receivers with MU-MIMO interference-cancelation capability). The target UE can use the ZP-CSI-RS resources (or port(s)) to detect multiple interference parameters including MO. While MO is one example herein, interference parameter detection may include one or more of the following: modulation order; interference power; interference port (if one schedules DM-RS resources from the co-scheduled UEs in ZP-CSI-RS); overlapping of FDRA regions; FDRA/TDRA (frequency and/or time domain resource allocation) of interference UE; and/or presence of co-scheduled interference UE.

In terms of the number of slots, the ZP-CSI-RS configuration is periodic and may apply to some or all instances of slot where the target UE is scheduled. It is likely to persist even across active->inactive->active RRC cycles. In terms of ports, an antenna port is defined such that the channel over which a symbol on the antenna port is conveyed can be inferred from the channel over which another symbol (e.g., a RS) on the same antenna port is conveyed.

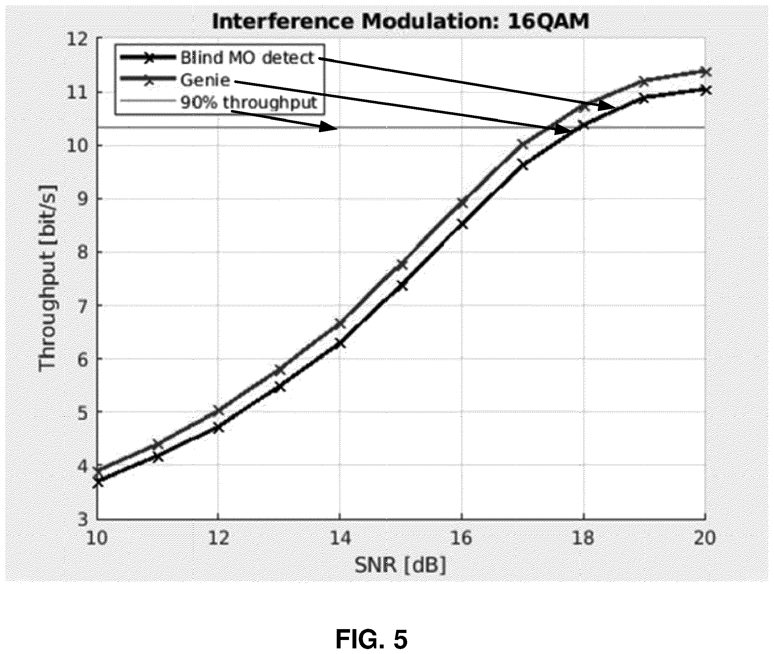

The examples here overlap the ZP-CSI-RS with PDSCH/DM-RS/and the like of interfering UEs. However, a target UE in the examples can measure the MO (or other interference parameter) of the PDSCH from interfering UEs, without being disturbed by its own target PDSCH. Simulations (e.g., see FIG. 5) show that this improves the MO detection which then helps to bring the throughput to more than 95% of the maximum possible throughput for a certain MCS.

Additionally, consider the following.

One can RRC-signal multiple ZP-CSI-RS ports (the term "port" and "resource" for a RS may be used interchangeably wherever applicable), which may be mapped to a specific part of a slot (in frequency and/or time domain). Each port is used to detect MO on one or more interference ports within that part of the slot.

These ZP-CSI-RS port/ports may also be marked as optional in terms of usage of MO detection. In this case, the UE will detect absence of a useful signal on its own PDSCH antenna ports to determine if ZP-CSI-RS is present. If a useful signal is present, UE can deduce that ZP-CSI-RS was not applied to these REs. By contrast, if a signal on the ZP-CSI-RS is present but this signal is not one configured for the target UE, the RS indicates presence of a co-scheduled UE.

Detection of the signals intended for target UE being present or being absent can be implanted in various ways. One method is to compare the average energy per RE of ZP-CSI-RS resources and PDSCH resources. If the PDSCH RE contain more average energy than ZP-CSI-RS RE, with a configurable threshold, no signal intended for the target UE is present in the ZP-CSI-RS resources.

In further detail, if a co-scheduled UE is present (meaning the NW has scheduled a transmission to the co-scheduled UE), then the ZP-CSI-RS resources will have no signal intended for the target UE present. If a co-scheduled UE is absent, then the ZP-CSI-RS resource will be configured but a signal for the target UE may be present. So, power in the ZP-CSI-RS REs will be either from target UE's own PDSCH or from co-scheduled UEs PDSCH, but never from both at same time.

The UE can also be configured to report on ZP-CSI-RS by configuring a CSI-IM reporting mapped to ZP-CSI-RS ports. RSRP or CQI reporting can be configured on these ports and the network can use the received reports to adjust the MCS to account for the co-scheduled UEs interference. This usage reduces the overhead due to introducing separate ZP-CSI-RS for MO measurement.

Now that an overview of examples has been provided, further details are provided. Simulations show that detection based on ZP-CSI-RS reduces the detection complexity significantly and at the same time reduces the performance gap to about the performance of a genie receiver while reaching 10% BLER. See FIG. 5, which is a graph illustrating ZP-CSI-RS based full blind MO detection performance in accordance with an example.

The performance loss at 90% throughput is ~0.5 dB and this performance can reach close to 100% of the theoretical maximum throughput. And this is achieved by looking at a tiny fraction of the REs within a slot which are mapped to the ZP-CSI-RS.

FIG. 6 is a message sequence chart, also referred to as a signaling diagram, that shows the signals which can be exchanged between UE and the network for a method for modulation order detection enhancement. In this example, the network element 670 may be a gNB 170 or other network element.

In step 1, the UE 110 sends UE capability information (e.g., as part of a message) to the network element 670. This information indicates the capability of the UE to implement an advanced receiver for MU-MIMO, where the advanced receiver supports at least the ZP-CSI-RS example(s) described herein. That is, the UE can indicate it supports an advanced-receiver with interference-cancelation capability.

In step 2, the gNB scheduler of the network element 670 determines the UE allocation and the ZP-CSI-RS REs within the UE's allocation. The network element 670 performs (in step 4) RRC signaling, e.g., using an RRC Reconfig signaling, to inform the UE of the ZP-CSI-RS configuration. The signaling in step 3 may include at least one of the following (described in more detail below): port number; k₀, l_{0;} density of CSI-RS resources/ports indicating how many REs in a PRB are used for a CSI-RS port; IsOptional; blind detection usage flag; or CSI-IM reporting based on ZP-CSI-RS port. The UE in step 4 stores the configuration of the ZP-CSI-RS ports.

In step 5, the network element 670 transmits PDSCH with or without (with/without) co-schedule UEs PDSCH. In response, the UE 110 performs blind MO detection and other interference parameters detection in step 6. In step 7, the UE 110 performs (e.g., optional) reporting to the network element 670 based on the (stored) ZP-CSI-RS ports.

Notes on FIG. 6 include the following.

For step 3, and information involved in this step, the following are examples of what could be implemented.
1) The value "port number" represents the used ports of the ZP-CSI-RS. This value influences placement and number of the REs pertaining to the ZP-CSI-RS.
2) The tuple "(k0, l0)" represents the root ZP-CSI-RS., i.e., this tuple determines the placement of the ZP-CSI-RS REs in the frequency and time domain of a slot.
3) An "IsOptional" information is one way to implement that these ZP-CSI-RS port/ports may also be marked as optional in terms of usage of MO detection. In this case, the UE will detect absence of a useful signal on its own PDSCH resources or antenna ports to determine if ZP-CSI-RS is present. If a useful signal is present (e.g., one directed to the UE, indicated by a threshold), the UE can deduce that ZP-CSI-RS was not applied to these REs and it indicates absence of a co-scheduled UE. If a signal is present on the ZP-CSI-RS but is not directed to the UE, the RS indicates presence of a co-scheduled UE. Additionally, ports are considered to be synonymous with resources, and therefore antenna ports are considered to be synonymous with resources, at least in most cases.
4) A "Blind detection usage" information indicates to the UE at least one of that the ZP-CSI-RS resources (or port(s)) repeats every slot, or a subset of slots; or that there is existence of co-scheduled UE; or that the ZP-CSI-RS resources (or port(s)) are to enable blind detection of interference parameters for advanced receivers (e.g., advanced-receivers with MU-MIMO interference-cancelation capability). While this information may directly or indirectly, indicate the existence of co-scheduled UEs, the `Is Optional' information may add the optional feature that the resource elements of ZP-CSI-RS can carry the target UEs intended signal when the co-scheduled UE is absent. This requires the target UE to turn on the feature of detection of intended signal in the ZP-CSI-RS. The `Is Optional' may reduce the overhead of the ZP-CSI-RS for MO detection.
5) A "CSI-IM reporting based on ZP-CSI-RS resources" information represents information to also configure the ZP-CSI-RS resources configured for MO, for usage in CSI-IM measurement and reporting. This can negate the overhead introduced by having ZP-CSI-RS for MO.

In example embodiments, the BlindDetectionUsage information indicates the ZP-CSI-RS-assisted MO scheme. This works without detection of intended signal (e.g., energy). Put another way, `Blind detection usage' indicates to the UE that, in the ZP-CSI-RS resources, PDSCH for other co-scheduled UEs will be present. In other words, if BlindDetectionUsage is present, then an advanced receiver function of blind MO detection is requested; if BlindDetectionUsage is absent, then ZP-CSI-RS is configured with different use cases. Once "BlindDetectionUsage" is present, "IsOptional" can be present or absent. The "IsOptional" then adds an optional feature that the resource elements of ZP-CSI-RS can carry target UE signals in specific circumstances such that the UE needs to turn on the feature of detecting intended signal (e.g., energy) in ZP-CSI-RS, which then may reduce overhead of the ZP-CSI-RS for MO scheme. If "IsOptional" is present, then the ZP-CSI-RS might sometimes be filled with useful data, and the UE additionally needs to activate the useful signal detection (i.e., in addition to MO detection). If "IsOptional" is absent, then the UE can be sure that ZP-CSI-RS is never filled with useful data and useful signal detection is not necessary.

There are the following optional additions to step 3.
1) An RRC IE: maxMO or maxTable. This IE indicates the maximum modulation order, which the target UE can expect for the co-scheduled UEs to be configured with. The maximum MCS table can instead be signaled, it holds equivalent information.
2) RRC IE: List of maxMOs. This IE is a useful addition that contains a list of maximum modulation order the target UE can expect each co-scheduled UE to be configured with. The list also indirectly discloses the existence and number of co-scheduled UEs, by including a "none" choice for MO.

An example is the following:

```
            maxMOs ::= SEQUENCE{ (1..maxCoScheduledUEs) OF
            ENUMERATED {none, 4QAM, 16QAM, 64QAM, 256QAM, spare2, spare 1}
```

}Signaling of this may be performed using, e.g., semi-static RRC signaling, where "semi-static" means the IE is changed once to cover multiple transmissions of PDSCH.

3) RRC IE List of instMOs. This IE contains a list of modulation order the target UE can expect each co-scheduled UEs to be configured with. The list also indirectly discloses the existence and number of co-scheduled UEs, by including a "none" choice for MO.

An example is the following:

```
            instMOs ::= SEQUENCE{ (1..maxCoScheduledUEs) OF
            ENUMERATED {none, 4QAM, 16QAM, 64QAM, 256QAM, spare2, spare 1 }
            }
```

Signaling of this may be performed using, e.g., semi-static RRC signaling.

Regarding step 6, in one embodiment, this step is implemented as follows.
1) For the REs indicated by ZP-CSI-RS additionally carrying the new MO measurement signaling: Blindly undo the channel effects of signals coming from co-scheduled UEs by using the assumption of a same DM-RS configuration as target UEs, except for using all non-target UE DM-RS ports.
2) Collect all results from all ZP-CSI-RS REs in a single constellation diagram.
3) Use clustering algorithms to find clusters in this constellation diagram.
   a) One algorithm is to slice the constellation diagram with all grids of possible MOs.
   b) Calculate sampled center of all grid partitions and compare delta to geometric center (i.e., the undisturbed constellation points).
   c) Choose grid with smallest delta as being the detected MO.

Concerning (b) and (c), there is a geometric center to a grid square. The constellation sample points in each grid square form a "cloud" that also has a center. The difference between the sample center and geometric center is the "delta" referred to above.

4) Optionally, the receiver can discard positive MO detection results if the delta threshold is too large. In this case, the receiver assumes to only have received noise and that no corresponding co-scheduled user exists.

Turning to FIG. 7, this figure is a flowchart for interference parameter detection (such as modulation order detection) enhancement performed by a network element in an example. The network element may be a gNB 170 or other network element. In block 710, the network element sends, to a target user equipment, configuration of channel state information reference signals for use in a time-frequency resource space of a physical downlink shared channel. The configuration informs the target user equipment to use the channel state information reference signals for interference parameter detection of one or more co-scheduled user equipment in the physical downlink shared channel. In block 720, the network element transmits, toward the target user equipment, the channel state information reference signals.

Referring to FIG. 8, this figure is a flowchart for interference parameter detection (such as modulation order detection) enhancement performed by a UE 110 in an example. In block 810, the UE 110 receives, from a network element, configuration of channel state information reference signals for use in a time-frequency resource space of a physical downlink shared channel. The configuration informs the target user equipment to use the channel state information reference signals for interference parameter detection of one or more co-scheduled user equipment in the physical downlink shared channel. In block 820, the UE 110 receives, from the network element, the channel state information reference signals. In block 830, the UE 110 performs the interference parameter detection using the channel state information reference signals.

In an example embodiment, ZP-CSI-RS is configured to be used for blind detection of co-scheduled UE's interference parameters. Such ZP-CSI-RS, when present, replaces/punctures REs in target UEs PDSCH with zero power REs. In an example embodiment, the configured ZP-CSI-RS is present in every slot with co-scheduled UE interference.

In an example embodiment, the configuration of ZP-CSI-RS may include 'BlindDetectUsage' IE indicating presence of interference in all upcoming scheduled slots. The target UE uses ZP-CSI-RS to blindly determine interference parameters without needing to perform detection of signal directed to the target UE.

In an example embodiment, the configuration of ZP-CSI-RS with 'BlindDetectUage' IE is performed in a static way (e.g.., RRC) and then a new indicator is added to MAC-CE or DCI, which indicates presence of interference. The target UE then uses ZP-CSI-RS to blindly determine interference parameters whenever the new indicator is set, without needing to perform detection of signal directed to the target UE.

In an example embodiment, if an `IsOptional' IE is set to true in an RRC, MAC-CE or DCI signaling, the target UE needs to detect presence of ZP-CSI-RS, or rather a useful PDSCH signal in ZP-CSI-RS resources, to find out if a co-scheduled UE is present or not. A useful (to the target UE) PDSCH signal being present means that no co-scheduled UE is present, and otherwise blind determination of interference parameters is performed by the target UE (since a co-scheduled UE should be present).

Without in any way limiting the scope, interpretation, or application of the claims appearing below, a technical effect and/or advantage of one or more of the example embodiments disclosed herein include one or more of the following:
1) The techniques introduce less signaling overhead compared with conventional method.
2) The techniques improve blind detection performance enormously.
3) For UEs, it reduces the detection complexity greatly, as only a tiny fraction of REs in a slot are needed for detection.
4) It can be coupled with CSI-IM reporting, which will help networks to select the correct MCS for UEs in a MU-MIMO setup.

The following are additional examples.

Example 1. A method, comprising:
sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and
transmitting, by the network element toward the target user equipment, the channel state information reference signals.

Example 2. The method according to example 1, where the channel state information reference signals are resource elements in the time-frequency resource space and are configured by the configuration and the network element to have zero power and the target user equipment will not receive any signals intended for the target user equipment on the resource elements, unless indication in the configuration indicates there could be signals for the target user equipment on these resource elements for which the target user equipment would have to perform presence detection.

Example 3. The method according to example 2, wherein the resource elements having zero power have been punctured from a set of multiple resource elements configured for the target user equipment in the physical downlink shared channel.

Example 4. The method according to any of examples 1 to 3, wherein the interference parameter detection comprises modulation order detection.

Example 5. The method according to any of examples 1 to 4, wherein the channel state information reference signals are configured by the network element to be reserved in every slot or a subset of slots for the physical downlink shared channel for the target user equipment.

Example 6. The method according to any of examples 1 to 5, further comprising: receiving from the target user equipment an indication that the target user equipment supports the interference parameter detection.

Example 7. The method according to any of examples 1 to 6, wherein sending configuration further comprises sending signaling indicating at least one of that there is existence of co-scheduled user equipment or that the channel state information reference signals are for blind detection of interference parameters, by using radio resource control signaling or a control element in medium access control signaling or a downlink control information signaling.

Example 8. The method according to any of examples 1 to 7, wherein the configuration informing the target user equipment to use the channel state information reference signals for interference parameter detection also informs the target user equipment about existence of co-scheduled user equipment that are scheduled in the resource elements of the channel state information reference signals.

Example 9. The method according to any of examples 1 to 8, wherein the target user equipment is one of a plurality of user equipment that form a multitude of scheduled user equipment that have indicated to the network element that they are able to support the interference parameter detection, and wherein the network element schedules the user equipment in the multitude of scheduled user equipment to have different non-overlapping channel state information reference signal configurations.

Example 10. The method according to any of examples 1 to 9, wherein the configuration indicates to the target user equipment that the target user equipment can use the channel state information reference signals to detect one or more interference parameters in addition to modulation order detection.

Example 11. The method according to any of examples 1 to 10, wherein the configuration further indicates to the target user equipment that the resource elements of the channel state information reference signals can carry signals for the target user equipment and signal presence detection for at least signals directed to the target user equipment is required.

Example 12. A method, comprising:
receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel;
receiving, by the target user equipment from the network element, the channel state information reference signals; and
performing, by the target user equipment, the interference parameter detection using the channel state information reference signals.

Example 13. The method according to example 12, where the channel state information reference signals are resource elements in the time-frequency resource space and are configured by the configuration and the network element to have zero power and the target user equipment will not receive any signals intended for the target user equipment on the resource elements, unless indication in the configuration indicates there could be signals for the target user equipment on these resource elements for which the target user equipment would have to perform presence detection.

Example 14. The method according to example 13, wherein the resource elements having zero power have been punctured from a set of multiple resource elements configured for the target user equipment in the physical downlink shared channel.

Example 15. The method according to any of examples 12 to 14, wherein the interference parameter detection comprises modulation order detection and the performing the interference parameter detection performs modulation order detection.

Example 16. The method according to any of examples 12 to 15, wherein the channel state information reference signals are configured to be reserved in every slot or a subset of slots for the physical downlink shared channel for the target user equipment.

Example 17. The method according to any of examples 12 to 16, further comprising sending, from the target user equipment to the network element, an indication that the target user equipment supports the interference parameter detection.

Example 18. The method according to any of examples 12 to 17, wherein receiving configuration further comprises receiving signaling indicating at least one of that there is existence of co-scheduled user equipment or that the channel state information reference signals are for blind detection of interference parameters, by using radio resource control signaling or a control element in medium access control signaling or a downlink control information signaling.

Example 19. The method according to any of example 12 to 18, wherein the configuration informing the target user equipment to use the channel state information reference signals for interference parameter detection also informs the target user equipment about existence of co-scheduled user equipment that are scheduled in the resource elements of the channel state information reference signals.

Example 20. The method according to any of examples 12 to 19, wherein the configuration indicates to the target user equipment that the target user equipment can use the channel state information reference signals to detect one or more interference parameters in addition to modulation order detection.

Example 21. The method according to any of examples 12 to 20, wherein the configuration further indicates to the target user equipment that the resource elements of the channel state information reference signals can carry target user equipment signals in one or more specific circumstances, and in response the target user equipment performs one of the following:
determining by the target user equipment that the one or more channel state information reference signals are not present, based on a signal directed to the target user equipment being detected as present in the resource elements of the one or more of channel state information reference signals; or
determining by the target user equipment that the one or more channel state information reference signals indicate presence of a co-scheduled user equipment, based on a signal not directed to the target user equipment being detected as present in the resource elements of the one or more of channel state information reference signals.

Example 22. The method according to example 21, wherein determination of a signal directed to the target user equipment being present in the resource elements of the channel state information reference signals causes the target user equipment to disable interference cancellation in an interference cancellation receiver of the target user equipment.

Example 23. A computer program, comprising instructions for performing the methods of any of examples 1 to 22, when the computer program is run on an apparatus.

Example 24. The computer program according to example 23, wherein the computer program is a computer program product comprising a computer-readable medium bearing instructions embodied therein for use with the apparatus.

Example 25. The computer program according to example 23, wherein the computer program is directly loadable into an internal memory of the apparatus.

Example 26. An apparatus, comprising means for performing:
sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and
transmitting, by the network element toward the target user equipment, the channel state information reference signals.

Example 27. The apparatus according to example 26, where the channel state information reference signals are resource elements in the time-frequency resource space and are configured by the configuration and the network element to have zero power and the target user equipment will not receive any signals intended for the target user equipment on the resource elements, unless indication in the configuration indicates there could be signals for the target user equipment on these resource elements for which the target user equipment would have to perform presence detection.

Example 28. The apparatus according to example 27, wherein the resource elements having zero power have been punctured from a set of multiple resource elements configured for the target user equipment in the physical downlink shared channel.

Example 29. The apparatus according to any of examples 26 to 28, wherein the interference parameter detection comprises modulation order detection.

Example 30. The apparatus according to any of examples 26 to 29, wherein the channel state information reference signals are configured by the network element to be reserved in every slot or a subset of slots for the physical downlink shared channel for the target user equipment.

Example 31. The apparatus according to any of examples 26 to 30, wherein the means are further configured for performing: receiving from the target user equipment an indication that the target user equipment supports the interference parameter detection.

Example 32. The apparatus according to any of examples 26 to 31, wherein sending configuration further comprises sending signaling indicating at least one of that there is existence of co-scheduled user equipment or that the channel state information reference signals are for blind detection of interference parameters by using radio resource control signaling or a control element in medium access control signaling or a downlink control information signaling.

Example 33. The apparatus according to any of examples 26 to 31, wherein the configuration informing the target user equipment to use the channel state information reference signals for interference parameter detection also informs the target user equipment about existence of co-scheduled user equipment that are scheduled in the resource elements of the channel state information reference signals.

Example 34. The apparatus according to any of examples 26 to 33, wherein the target user equipment is one of a plurality of user equipment that form a multitude of scheduled user equipment that have indicated to the network element that they are able to support the interference parameter detection, and wherein the network element schedules the user equipment in the multitude of scheduled user equipment to have different non-overlapping channel state information reference signal configurations.

Example 35. The apparatus according to any of examples 26 to 34, wherein the configuration indicates to the target user equipment that the target user equipment can use the channel state information reference signals to detect one or more interference parameters in addition to modulation order detection.

Example 36. The apparatus according to any of examples 26 to 35, wherein the configuration further indicates to the target user equipment that the resource elements of the channel state information reference signals can carry signals for the target user equipment and signal presence detection for at least signals directed to the target user equipment is required.

Example 37. An apparatus, comprising means for performing:
receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel;
receiving, by the target user equipment from the network element, the channel state information reference signals; and
performing, by the target user equipment, the interference parameter detection using the channel state information reference signals.

Example 38. The apparatus according to example 37, where the channel state information reference signals are resource elements in the time-frequency resource space and are configured by the configuration and the network element to have zero power and the target user equipment will not receive any signals intended for the target user equipment on the resource elements, unless indication in the configuration indicates there could be signals for the target user equipment on these resource elements for which the target user equipment would have to perform presence detection.

Example 39. The apparatus according to example 38, wherein the resource elements having zero power have been punctured from a set of multiple resource elements configured for the target user equipment in the physical downlink shared channel.

Example 40. The apparatus according to any of examples 37 to 39, wherein the interference parameter detection comprises modulation order detection and the performing the interference parameter detection performs modulation order detection.

Example 41. The apparatus according to any of examples 37 to 40, wherein the channel state information reference signals are configured to be reserved in every slot or a subset of slots for the physical downlink shared channel for the target user equipment.

Example 42. The apparatus according to any of examples 37 to 41, wherein the means are further configured for performing: sending, from the target user equipment to the network element, an indication that the target user equipment supports the interference parameter detection.

Example 43. The apparatus according to any of examples 37 to 42, wherein receiving configuration further comprises receiving signaling indicating at least one of that there is existence of co-scheduled user equipment or that the channel state information reference signals are for blind detection of interference parameters by using radio resource control signaling or a control element in medium access control signaling or a downlink control information signaling.

Example 44. The apparatus according to any of examples 37 to 43, wherein the configuration informing the target user equipment to use the channel state information reference signals for interference parameter detection also informs the target user equipment about existence of co-scheduled user equipment that are scheduled in the resource elements of the channel state information reference signals.

Example 45. The apparatus according to any of examples 37 to 44, wherein the configuration indicates to the target user equipment that the target user equipment can use the channel state information reference signals to detect one or more interference parameters in addition to modulation order detection.

Example 46. The apparatus according to any of examples 37 to 45, wherein the configuration further indicates to the target user equipment that the resource elements of the channel state information reference signals can carry target user equipment signals in one or more specific circumstances, and in response the target user equipment performs one of the following:
determining by the target user equipment that the one or more channel state information reference signals are not present, based on a signal directed to the target user equipment being detected as present in the resource elements of the one or more of channel state information reference signals; or
determining by the target user equipment that the one or more channel state information reference signals indicate presence of a co-scheduled user equipment, based on a signal not directed to the target user equipment being detected as present in the resource elements of the one or more of channel state information reference signals.

Example 47. The apparatus according to example 46, wherein determination of a signal directed to the target user equipment being present in the resource elements of the channel state information reference signals causes the target user equipment to disable interference cancellation in an interference cancellation receiver in the target user equipment.

Example 48. The apparatus of any preceding apparatus example, wherein the means comprises:
at least one processor; and
at least one memory storing instructions that, when executed by at least one processor, cause the performance of the apparatus.

Example 49. An apparatus, comprising:
one or more processors; and
one or more memories storing instructions that, when executed by the one or more processors, cause the apparatus at least to perform:
sending, by a network element in a wireless network and to a target user equipment, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and
transmitting, by the network element toward the target user equipment, the channel state information reference signals.

Example 50. An apparatus, comprising:
one or more processors; and
one or more memories storing instructions that, when executed by the one or more processors, cause the apparatus at least to perform:
receiving, by a target user equipment in a wireless network and from a network element, configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel;
receiving, by the target user equipment from the network element, the channel state information reference signals; and
performing, by the target user equipment, the interference parameter detection using the channel state information reference signals.

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1B. A computer-readable medium may comprise a computer-readable storage medium (e.g., memories 125 or other device) that may be any media or means that can contain, store, and/or transport the instructions for use by or in connection with an instruction execution system, apparatus, or device, such as a computer. A computer-readable storage medium does not comprise propagating signals, and therefore may be considered to be non-transitory. The term "non-transitory", as used herein, is a limitation of the medium itself (i.e., tangible, not a signal) as opposed to a limitation on data storage persistency (e.g., RAM, random access memory, versus ROM, read-only memory).

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:
- 5G: fifth generation
- AMF: access and mobility management function
- BBU: base band unit
- BLER: block error rate
- CE: control element
- CSI: channel state information
- CQI: channel quality information
- CU: central unit
- DCI: Downlink control information
- DMRS or DM-RS: Demodulation reference signal
- DU: distributed unit
- eNB (or eNodeB): evolved Node B (e.g., an LTE base station)
- FDRA: Frequency domain resource allocation
- gNB (or gNodeB): base station for 5G/NR
- IE: information element
- I/F: interface
- IM: interference measurement
- LTE: long term evolution
- MAC: medium access control
- MAC-CE: MAC control element
- MCS: modulation and coding scheme
- MIMO: multiple input, multiple output
- MME: mobility management entity
- MO: Modulation Order
- MU: multi-user
- MUST: Multiuser superposition transmission
- ng or NG: next generation
- ng-eNB or NG-eNB: next generation eNB
- NR: new radio
- N/W or NW: network
- NZP: non-zero power
- PDSCH: Physical downlink shared channel
- Qam: quadrature amplitude modulation
- QPSK: quadrature phase shift keying
- QR-DM: QR Decomposition based M-algorithm
- QR-MLD: QR decomposition based Maximum likelihood Detection
- RAN: radio access network
- RE: resource element
- Rel: release
- RLC: radio link control
- R-MI,: reduced complexity most likelihood
- RRH: remote radio head
- RRC: radio resource control
- RS: reference signal
- RSRP: Reference Signal Received Power
- RU: radio unit
- Rx: receiver
- SGW: serving gateway
- SMF: session management function
- SNR: signal-to-noise ratio
- TDRA: Time domain resource allocation
- Tx: transmitter
- UE: user equipment (e.g., a wireless, typically mobile device)
- UI: user interface
- UPF: user plane function
- ZP: zero power
- ZP-CSI-RS: Zero Power CSI Reference signal

## Claims

1. An apparatus, comprising means for performing:
sending, by a network element in a wireless network and to a target user equipment,
configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and
transmitting, by the network element toward the target user equipment, the channel state information reference signals.

2. The apparatus according to claim 1, wherein the means are further configured for performing: receiving from the target user equipment an indication that the target user equipment supports the interference parameter detection.

3. An apparatus, comprising means for performing:
receiving, by a target user equipment in a wireless network and from a network element,
configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel;
receiving, by the target user equipment from the network element, the channel state information reference signals; and
performing, by the target user equipment, the interference parameter detection using the channel state information reference signals.

4. The apparatus according to claim 3, wherein the means are further configured for performing: sending, from the target user equipment to the network element, an indication that the target user equipment supports the interference parameter detection.

5. The apparatus according to any of claims 1 to 4, where the channel state information reference signals are resource elements in the time-frequency resource space and are configured by the configuration and the network element to have zero power and the target user equipment will not receive any signals intended for the target user equipment on the resource elements, unless indication in the configuration indicates there could be signals for the target user equipment on these resource elements for which the target user equipment would have to perform presence detection.

6. The apparatus according to claim 5, wherein the resource elements having zero power have been punctured from a set of multiple resource elements configured for the target user equipment in the physical downlink shared channel.

7. The apparatus according to any of claims 1 to 6, wherein the channel state information reference signals are configured by the network element to be reserved in every slot or a subset of slots for the physical downlink shared channel for the target user equipment.

8. The apparatus according to any of claims 1 to 7, wherein the configuration comprises signaling indicating at least one of that there is existence of co-scheduled user equipment or that the channel state information reference signals are for blind detection of interference parameters, carried by radio resource control signaling or a control element in medium access control signaling or a downlink control information signaling.

9. The apparatus according to any of claims 1 to 8, wherein the configuration informing the target user equipment to use the channel state information reference signals for interference parameter detection also informs the target user equipment about existence of co-scheduled user equipment that are scheduled in the resource elements of the channel state information reference signals.

10. The apparatus according to any of claims 1 to 9, wherein the configuration indicates to the target user equipment that the target user equipment can use the channel state information reference signals to detect one or more interference parameters in addition to modulation order detection.

11. The apparatus according to any of claims 1 to 10, wherein the configuration further indicates to the target user equipment that the resource elements of the channel state information reference signals can carry signals for the target user equipment and signal presence detection for at least signals directed to the target user equipment is required, and when dependent on claim 3, the means are further configured for performing:
determining by the target user equipment that the one or more channel state information reference signals are not present, based on a signal directed to the target user equipment being detected as present in the resource elements of the one or more of channel state information reference signals; or
determining by the target user equipment that the one or more channel state information reference signals indicate presence of a co-scheduled user equipment, based on a signal not directed to the target user equipment being detected as present in the resource elements of the one or more of channel state information reference signals.

12. The apparatus according to claim 11, wherein determination of a signal directed to the target user equipment being present in the resource elements of the channel state information reference signals causes the target user equipment to disable interference cancellation in an interference cancellation receiver in the target user equipment.

13. A method, comprising:
sending, by a network element in a wireless network and to a target user equipment,
configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel; and
transmitting, by the network element toward the target user equipment, the channel state information reference signals.

14. A method, comprising:
receiving, by a target user equipment in a wireless network and from a network element,
configuration of channel state information reference signals for use in a time-frequency resource space of a physical downlink shared channel, wherein the configuration informs the target user equipment to use the channel state information reference signals for interference parameter detection of one or more co-scheduled user equipment in the physical downlink shared channel;
receiving, by the target user equipment from the network element, the channel state information reference signals; and
performing, by the target user equipment, the interference parameter detection using the channel state information reference signals.

15. A computer readable media comprising program instructions that, when executed by a processor, cause the processor to perform a method as claimed in claim 13 or 14.
